# EUROPEAN PATENT APPLICATION

(11) **EP 3 089 409 A1**
(43) Date of publication of application: **02.11.2016**
(21) Application number: 13900511.0
(22) Date of filing: 26.12.2013
(51) Int. Cl.: H04L 12/723, H04L 12/851

(54) **METHOD AND SYSTEM FOR RESTORING QOS DETERIORATIONS IN MPLS NETWORKS**

(71) Applicant: Telefonica, S.A., 28013 Madrid (ES)
(72) Inventor: FERNANDEZ-PALACIOS GIMENEZ, Juan Pedro, E-28013 Madrid (ES); RODRIGUEZ MARTINEZ, Juan, E-28013 Madrid (ES)
(74) Representative: Herrero & Asociados, S.L.
(86) International application number: PCT/ES2013/070929
(87) International publication number: WO 2015/097318

(57) **Abstract**

A system (10) implementing a method for determining QoS degradations comprises:
- receiving alarms (a) from application layer (20) or from network nodes (31) of a MPLS network, including Passive Traffic Analyzer (32), Physical Layer Monitoring (33) and MPLS OAM (34) nodes.
- depending on the alarm, the system (10) requests testing (d) for location and the network nodes (31) answer back with location (e),
- once the fault is located, the system (10) starts traffic restoration (h) via MPLS Signaling (35) and receives the result (i),
- the system (10) may need to consult the System Database (36), optionally query (b) - reply (c) step before requesting location, while query (f) - response (g) step is mandatory before restoration (h),
- once traffic restored, further testing by the network nodes (31) and/or the application layer (20) are triggered (j) by the system (10) to ensure the correct overall QoS within the new network situation,
- a loop (i) of further restoration can be triggered by the system (10) until a global stable non-degraded behavior is declared.

## Description

### Field of the invention

The present invention has its application within the telecommunication sector, especially, relates to Quality Assurance in computer networks and, more particularly, refers to a system and method for preventing, detecting and restoring Quality of Service (QoS) degradations in End-to-End (E2E) MultiProtocol Label Switching (MPLS) networks.

### Background of the invention

Internet Protocol (IP) Core networks are usually deployed over Multiprotocol Label Switching (MPLS) technology due to the wide range of benefits that this encapsulation provides, in terms of Traffic Engineering (TE), homogeneous provision of any type of service, restoration tools and Quality of Service (QoS) maintenance. For those reasons, in the past recent years MPLS has also experienced an extension to other existing segments, like regional networks. However, these MPLS domains have normally been kept separated, at least in large operators, mainly due to scalability causes.

Very recently, an effort has been done to define the so called End-to-End (E2E) MPLS networks, which means scalable MPLS transport over any type of access and layer-1 technologies, at any network segment (and between any network segment) and for any type of service. In other words, all network routers (distribution routers, edge routers and metro routers) provide a unique MPLS-based transport layer for any service established among Access nodes and Service nodes. The main advantages that E2E MPLS networks offer are the flexibility and homogeneity while providing services over Pseudo-Wires (PWs) in (and across) all network segments, the simplification of the network management and the existence of E2E Operation, Administration and Maintenance (OAM) defined mechanisms for faults management. The most relevant example of E2E MPLS architectures is Seamless MPLS. However, one of the most important issues that E2E MPLS networks present is precisely related with fault management.

The total fault time (i.e. the time during which the service is unavailable) is composed of three time intervals. The process comprises the following three steps: after a fault happens, first step (i) is to detect that it has happened, then (ii) to locate where it has happened, and finally (iii) to restore it. A goal of any fault management system should be to reduce to the maximum possible the total fault time.

For that purpose, automated processes are a requirement; if any of the three prior steps, (i) detection, (ii) location or (iii) restoration, needs of human intervention, then the response time is increased, and the service is unavailable during a longer time. MPLS enables several automated restoration mechanisms, although it is worth mentioning that they are not fast on all occasions.

Besides, these are not the only challenges: current fault management processes (and restoration mechanisms) deal mainly with Loss of Connectivity (LoC) failures, but there exist other impairments which also affect QoS, like network congestion for example. Thus, proper fault management also needs to address such degradation causes.

Current MPLS monitoring tools and restoration solutions are briefly described below:
- MPLS OAM monitoring
   OAM protocols have been defined for Ethernet, IP and MPLS networks, and also for PWE3 (Pseudo Wires Emulation Edge to Edge). In particular for MPLS and PWE3, tools like LSP Ping or Bidirectional Forwarding Detection (BFD) have since long been used for failure detection: monitoring messages are exchanged in-band between pairs of routers and when some do not arrive, a failure is detected. After detection and localization, MPLS networks can then execute the corresponding restoration mechanism. Recently, such traditional tools have been extended in the context of MPLS-TP with enhanced OAM MPLS capabilities that enable network providers to monitor network availability, quality of customers' services (QoS) and to deliver the required SLAs. The MPLS-TP OAM tools are being defined mainly at the IETF, although at ITU-T there is another parallel definition based on similar mechanisms. The OAM toolset consists of a comprehensive set of fault management and performance monitoring capabilities, which can be used by operators to detect and localize defects more effectively.
- Passive monitoring
   Passive QoS monitoring techniques are divided in two main groups. On one hand, there exist passive monitoring techniques which make use of the network traffic, complex processing algorithms and traffic distribution models to provide knowledge about the status of operators' networks. Examples of such techniques include Remote Monitoring (RMON), Simple Network Monitoring Protocol (SNMP) or NetFlow capable devices. Remote Monitoring (RMON) is a standard protocol which enables various network monitors and console systems to obtain and exchange network-monitoring data. SNMP is also a standard protocol, aiming at monitoring and configuration of network nodes. Finally, NetFlow is a network protocol developed by Cisco Systems for collecting IP traffic information, which has become an industry standard for traffic monitoring and is supported on various platforms. On the other hand, an alternative for passive monitoring consists of devices that monitor traffic as it passes by. These devices can be special purpose devices (passive probes) such as a sniffer, or they can be built in devices such as routers, switches or hosts (e.g. Deep Packet Inspection - DPI - supporting devices).
- Active monitoring
   The active monitoring approach relies on the capability to inject test packets into the network or to perform measurements at the application level. As such, it creates extra traffic, traffic which is perfectly known to the monitoring system, so that it can be identified. In that sense, it is very similar to OAM-based monitoring, although it is normally performed by probes external to network nodes. The active approach provides explicit control on the generation of packets for measurement scenarios (control on the nature of traffic generation, sampling techniques, packet sizes, etc.) and timing; thus, it implies testing what is required when it is required. Most accepted classification comprises active monitoring tools in two groups: PGM (Probe Gap Models) which bases the estimation on the dispersion gap between two consecutive probing packets, and PRM (Probe Rate Models), whose estimations rely on sending trains of probing packets at increasing rates. In the literature several initiatives and developments of such tools can be identified. Active monitoring tools can be executed continuously (typically for proactive fault management) or on-demand (normally for reactive purposes, after some alarm has been generated by another mechanism).
- Physical layer monitoring
   Apart from monitoring at layers 2, 3 and beyond, monitoring at physical layer is also very common in operators' networks. Such monitoring can be carried out via encapsulation methods (LAN, WAN, G.709), which permit the physical layer to provide alarms like Loss of Signal, Loss of Frame, Remote Defect Indication, etc., to the corresponding management system.

Besides the tools already described above, there is still an additional functionality that plays an important role once a failure is detected and located: MPLS restoration. Restoration mechanisms need to be triggered to restore the client traffic flows, i.e., to inject them over an alternative path which does not present any fault. In MPLS there exist several procedures to achieve such behavior, being Fast-Reroute (FRR) the most common one. Moreover, for whatever reason (e.g. when congestion is detected), network operators may want to move the traffic load from one network segment to another. Such operation needs to be executed without any loss of the client traffic, what is known as "make before break" approach. In MPLS it is possible to make traffic engineering (TE) using RSVP-TE, an extension of the Resource Reservation Protocol (RSVP). Both restoration and traffic engineering processes can be determined as revertible or non-revertible. This means that it is possible to determine whether the traffic must revert into the original path or not once the failure has been repaired.
Also, in order to make delay- and loss-based traffic engineering (TE), there are several proposals from IETF (in a pre-standard phase), which include the possibility to monitor the network conditions prior to the establishment of any connectivity service, e.g., using the network status as input for the determination of the best path. This feature is essentially different from the ones presented above, which are focused on monitoring of currently set up services.

Another example which is worth mentioning is the method and apparatus for Network management support of OAM functionality disclosed in EP1176759, which describes a network management system with a graphical user interface (GUI) comprising several features to facilitate human operators' work, i.e., to facilitate the configuration and results gathering of OAM-based monitoring. Therefore, human intervention is still required. The only automated processes there described are (i) the OAM functionalities configuration along the nodes forming the paths (primary and backup), and (ii) the gathering of the OAM tests results and their presentation to the operator via the GUI. It is still the human operator who determines which tests need to be carried out upon an alarm reception. Moreover, the method described in EP1176759 does not include prevention features for QoS degradation.

Previously presented state-of-art solutions represent different approaches to carry out monitoring and performance measurement in real networks. Nevertheless, working as isolated features they are neither adapted nor solve all the presented problems, especially in terms of bandwidth consumption and automated operation in E2E MPLS networks. Some deficiencies of existing solutions are described below:
- Limitations of current OAM monitoring
   Since OAM detection mechanisms are based on monitoring packets injected in-band between nodes pairs in the network, the speed at which faults are detected (and thus, the amount of client traffic that is lost before the failure is restored) depends on the time interval between monitoring messages: if this interval is short, failures are detected very quickly, and few client packets are lost. However, the consumed bandwidth by these messages is higher, preventing operators from using this bandwidth for client traffic. With current network architectures, where Core and Regional MPLS domains are isolated, the number of Label Switched Paths (LSPs) that need monitoring is in the order of thousands. Thus, the bandwidth consumption by monitoring packets is limited, and detection speed can be fast. However, in the evolution towards E2E MPLS, with potentially hundreds of thousands (or even millions) of LSPs traversing all network domains up to the access, this consumption is very much increased, presenting scalability problems if fast detection is desired. It has to be noted that monitoring messages are sent in-band, i.e., over the same physical links as client packets travel across the network. The bandwidth consumption problem could be solved by means of out-of-band monitoring, using different physical links, but with this approach only node failures could be detected (not link failures on the traffic links). Together with the bandwidth consumption problem implicit to fast failure detection, E2E MPLS networks monitoring currently requires of manual interventions, as location procedures can be very complex. E2E MPLS solutions are based on a concept named MPLS hierarchy, which means that Label Switched Paths (LSPs) can be established at different levels. The result is that routers can act at the same time as 'edge' or 'intermediate' nodes, depending on the considered LSP, and that information related to some of these layers may be hidden from them. Thus, when an alarm is generated in the monitoring system, it may not be trivial to locate at which specific intermediate node the physical failure has occurred. Currently, this process is executed by an operator who triggers the injection of monitoring packets by distributed active probes (or OAM-supporting nodes) at the different MPLS levels, until the failure is found, process which is very time-consuming. The conclusion, then, is that OAM monitoring of E2E MPLS networks is not adapted in terms of automated operation either. Finally, detecting network congestion situations using performance monitoring OAM tools would not be very effective in terms of network load, as such tools inject large amounts of packets in the network.
- Limitations of passive monitoring protocols
   Passive probes are not normally used for network monitoring, due to the high number of existing critical points, which would demand a high number of external devices deployed over the network. Traffic sniffing or DPI are rarely used for this purpose as well, as there exist alternatives (like the monitoring protocols themselves) which are specific for these features; instead, they are more commonly used to gather client-related information at the service layer. Passive monitoring protocols, on the other hand, also present other limitations.
   Most passive monitoring protocols QoS estimations are affected not only by the queue occupation but also by traffic policies, defined for the different traffic types (multimedia, http, etc.), on the nodes that the traffic traverses. Thus, situations may appear in which the QoS estimation could be distorted due to an impaired sample whose origin does not reside in the queue occupation but on those policies, which the monitoring tool is not aware of. Normally, detection times are very low for two reasons: (i) the complexity of the algorithms and the post-processing phase, and (ii) the polling process required to collect the data and the generated traps and alarms. Depending on the type of failure and the layers which are being monitored, location time could also be high. If monitoring is made at the MPLS layer, and failures occur at intermediate nodes, passive tools cannot locate such failures on their own, needing support from any of the active tools which have been described. And finally, there is no direct internal communication between these protocols and the MPLS layer in network nodes, so triggering of restoration mechanisms would need to be done by means of external systems (normally requiring of human intervention).
- Limitations of active monitoring tools
   Normally, active monitoring tools are based on delay measurements to provide their estimations on the network QoS. Packet delay depends on many factors, for example, the packet size or the traffic class. Thus, the patterns of the injected traffic need to be as similar as possible to the real patterns of the client traffic traversing the network. Otherwise, the measurement would not be reliable. The real patterns are very complex and very variable nowadays, so it is very difficult to derive realistic models. For monitoring at the application layer of critical services, monitoring systems are only aware of network faults once the application layer has notified that the user is experiencing QoS degradations. This reactive behavior may not match the monitoring expectatives, as it is not possible to locate the network fault with measurements at the application layer, which derives in a very slow service restoration. Active monitoring entails the injection of probe packets in the network. Thus, the same limitations as for OAM monitoring apply: the bandwidth consumption problem and the lack of automated solutions for fault detection. And finally, as with the passive tools, there is no direct internal communication between these probes and the MPLS layer in network nodes, so triggering of restoration mechanisms would need to be done by means of external systems (normally requiring of human intervention). Presenting also the same limitations as OAM, and normally requiring of external probes being deployed over the network, active monitoring tools will not be considered in this invention, except for those at the application layer.
- Limitations of physical layer monitoring
   One is the most important limitation for physical layer monitoring tools: they are not able to detect impairments other than those at layer 1. For Loss of Connectivity, for example, these tools are very adequate: being internal to network nodes, normally equipment vendors implement the interface between them and the MPLS layer, so that alarms at layer 1 can directly trigger MPLS-based restoration processes. However, there is no process to be able to detect network congestion with layer 1 tools, for example.
- Limitations of restoration mechanisms
   Finally, it is worth mentioning a limitation for MPLS restoration mechanisms, related to faults at intermediate nodes. When faults occur at these nodes, on many occasions fast recovery is possible via local mechanisms like FRR. However, sometimes it is not (e.g. when there is not a backup link). On such occasions, new mechanisms as defined in the MPLS-TP framework can be used to inform the LSP ingress node, which in turn executes the end-to-end recovery mechanism (e.g., primary/backup) with which it may have been configured. However, in networks based on MPLS hierarchy like those of E2E MPLS, such approach derives in a common restoration process for all the service LSPs, which follow the backup path of the transport LSP. There is no way, to the best of our knowledge, to let the service end-points know about such failure apart from external management, for the simple reason that transport nodes are not aware of service LSPs. Thus, it is not possible to implement fast particularized end-to-end restoration at the service layer.

Summarizing, there is no single tool that permits scalable fast restoration (and thus low traffic losses, and thus high service availability) for every type of Quality of Service (QoS) degradation that may happen in large Multiprotocol Label Switching (MPLS) networks. In addition, automation does not exist for monitoring systems to date, needing of human intervention to detect, correlate and locate QoS degradations, which again increases the total required time for restoration. Existing automated solutions present either high failure location times or a high monitoring load, meaning that the associated consumed bandwidth is very high, preventing operators from using this bandwidth to offer additional connectivity services. Therefore, there is a need in the state of the art for a system to prevent, detect and restore QoS degradations based on monitoring systems which make coordinated use of several of such existing tools without human intervention and with fast response time.

### Summary of the invention

The present invention solves the aforementioned problems and overcomes previously explained state-of-art work limitations by disclosing a method and system that makes use of currently available monitoring mechanisms for QoS degradation detection, in a coordinated and automated fashion so that the monitoring load can be reduced. This is done by performing a centralized coordination of the monitoring mechanisms, which permits detecting potential critical situations by means of lightweight (i.e. low bandwidth consuming) tools, and then confirming or invalidating the degradation carrying out heavier measurements only at those segments where they need to be done. Therefore, the present invention provides a method and system for the automatic prevention, detection and restoration of QoS degradations, while minimizing the monitoring bandwidth consumed for this purpose: the invention makes use of low bandwidth consuming tools first, and confirms that degradations occur with heavier tools focused on specific segments, where an increment of bandwidth does not impact the whole network behaviour. The determination of critical segments also permits a faster restoration, which positively affects service availability.
Since in the prior-art there is not a single monitoring tool that is adequate to overcome all sort of degradations that can occur in current networks, the present invention makes use of the most powerful monitoring systems available in the market, coordinating them to increase the speed at which services are recovered from faults and to reduce the number of monitoring packets injected in the network. Moreover, the procedures defined for the invention are automated, which once again increases service availability as human intervention is avoided.

According to a first aspect of the present invention, a method for restoring QoS degradations in MPLS networks is disclosed and comprises the following steps:
- receiving one or more alarms from Application Layer or from a MPLS network node,
- locating a faulted segment of the MPLS network associated with the received alarm(s);
- correlating all the alarms associated with the faulted segment at the same location,
- determining services affected by the correlated alarms,
- for each affected service, obtaining restoration paths from a database
- restoring all the affected services using the restoration paths,
- testing the restored services.

A second aspect of the present invention is referred to a system for determining QoS degradations in MPLS networks, which comprises:
- service layer and network layer communication modules for receiving alarms respectively from Application Layer and from MPLS network node,
- an alarm management and correlation module for correlating all the alarms that the service layer and network layer communication modules send to it and which are associated with a faulted segment at a same location,
- one or more computation modules for determining services affected by the correlated alarms, received from the alarm management and correlation module, having information on the location of the faulted segment obtained from locating means of segments in the MPLS network and having access to a system database from which restoration paths for all the affected services are obtained,

- a signaling scheduler connected to MPLS signaling for enabling restoration of the affected services using the obtained restoration paths when is triggered by any of the computation modules,
- an active monitoring trigger which is requested by any of the computation modules for obtaining tests on the restored services, from the service layer through the service layer communication module and from the network layer through the network layer communication module.

The active monitoring trigger module not only triggers tests of restored services, but also, in a preferred embodiment of the invention, it triggers the heaviest tests (active tests) that confirm degradations. Thus, the active monitoring trigger can be requested by any of the computation modules for actively obtaining tests, for degradation confirmation purposes or over the restored services.
Locating means of the faulted segments are in a network node of the MPLS network, from which a computation module of the system defined above receives the alarm and so requests the location of this network segment. In the case of alarms received from Application Layer, locating means are provided by the system database, external or internal to the system, from which the location of the network segment used by the Application Layer is requested by a computation module of the system described above.

In a final aspect of the present invention, a computer program is disclosed, comprising computer program code means adapted to perform the steps of the described method when said program is run on a computer, a digital signal processor, a field-programmable gate array, an application-specific integrated circuit, a microprocessor, a micro-controller, or any combination of the aforementioned ones and/or another form of programmable hardware.

The method and system in accordance with the above described aspects of the invention have a number of advantages with respect to prior art, focused and oriented to increase the performance of E2E MPLS networks while providing services over the Label Switched Paths (LSPs). These advantages of the invention can be summarized as follows:
- The present invention provides a QoS Monitoring Manager with automation of the detection, location and prevention or restoration of QoS in E2E MPLS networks. An intelligent entity that coordinates different monitoring tools in order to proactively preserve QoS in E2E MPLS networks, in an automated and scalable way, does not exist to date in the state-of-art. The intelligence of the here proposed QoS Monitoring Manager system is able to keep track of the MPLS network and automatically evaluate when, where and by means of which monitoring technique the QoS of a certain service/path should be monitored. Thus, there is no need for human intervention in the monitoring process.
- The scalability of the proposed QoS Monitoring Manager system, focusing the active monitoring actions in those specific network segments in which the QoS is susceptible to be degraded, constitutes one of the most important added-value features, since E2E MPLS networks size makes impossible to scale with overloaded or unnecessary monitoring processes.
- By focusing on the network location where QoS degradations occur, the present invention is able to reduce the number of total monitoring packets to confirm these QoS degradations, enhancing the scalability of the QoS Monitoring Manager (QMM) system. Thus, the number of simultaneously provisioned services can be increased, using the unused bandwidth. Moreover, the ability of the QMM system to locate specific MPLS network segments which are QoS-critical constitutes an added value, not only in terms of monitoring resources, but also in terms of required time for restoration, and thus in terms of service availability.
- By means of preventive restoration mechanisms, which are able to automatically detect and prevent QoS degradations in the network, the present invention allows the maximization of the end-user Quality of Service (QoS) in E2E MPLS networks.
- Regarding EP1176759, the main advantageous differences of the invention are the aforementioned preventive restoration mechanisms and the automatization of these mechanisms as well as the automated mechanisms of QoS degradation detection and restoration.

These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 shows a system for determining QoS degradations and its relationships with other existing network entities in a MPLS network scenario, according to a preferred embodiment of the invention.
Figure 2 shows a flow chart of messages in the system of Figure 1 for determining QoS degradations, in accordance with a possible embodiment of the invention.
Figure 3 shows a flow chart of messages in the system of Figure 1 for determining QoS degradations reported by alarms coming from the Application Layer, in accordance with a possible use application case of the invention.
Figure 4 shows a flow chart of messages in the system of Figure 1 for determining QoS degradations reported by alarms coming from the Physical Layer or from a Passive Traffic Analyzer, in accordance with another possible use application case of the invention.
Figure 5 shows a flow chart of messages in the system of Figure 1 for determining QoS degradations reported by alarms coming from MPLS OAM tools, in accordance with a further possible use application case of the invention.
Figure 6 shows a flow chart of messages in the system of Figure 1 in a proactive operation mode for determining QoS degradations, in accordance with another possible embodiment of the invention.
Figure 7 shows a block diagram of the system architecture for determining QoS degradations in a MPLS network, according to a preferred embodiment of the invention.

### Preferred embodiment of the invention

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

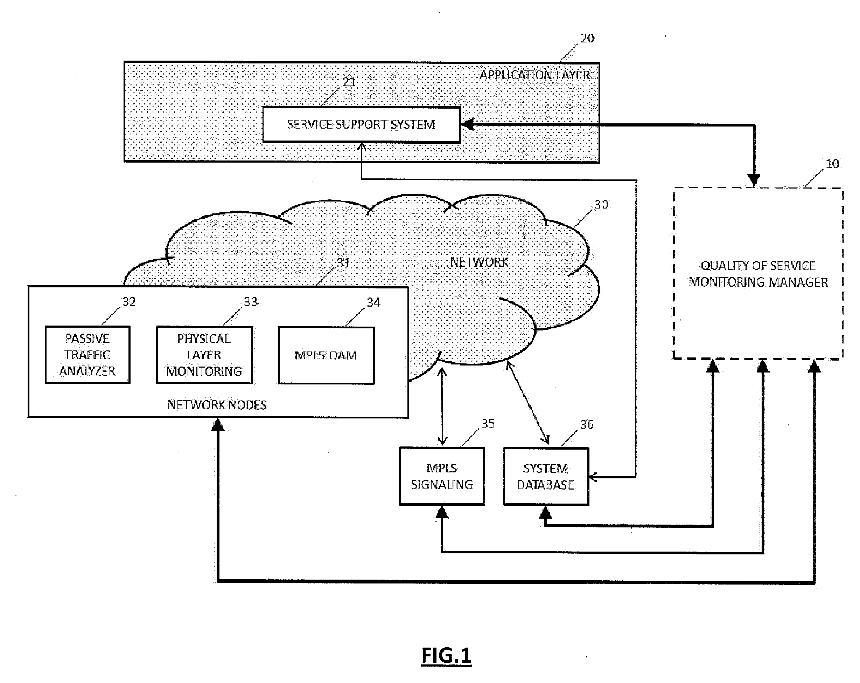

It is within this context, that various embodiments of the invention are now presented with reference to the FIGs. 1-7.

Figure 1 presents a QoS Monitoring Manager (QMM) as a system (10) for determining QoS degradations in a MPLS network (30) and also shows the relationships and specific interfaces between the system (10) and existing modules, which are the following ones:
- Application Layer (20): In the Internet model, it is the layer where services (applications) reside, creating and exchanging user data among different hosts across a computer network.
- Service Support System (21): it is the module in charge of collecting the monitoring data from the application layer (20), obtained by means of active measurements, and sending it to the system (10). It shares the same vision of the experienced quality with the end clients, so is therefore capable of detecting degradation or violations of the SLAs subscribed by them.
- Passive Traffic Analyzer (32): this module or functional entity includes the passive measurements that monitoring protocols can perform in operators' MPLS networks (30). Thus, they are located at the network nodes (31), although equivalent measurements carried out by external probes are also admitted. Two possible operation modes (which can simultaneously coexist) are considered: on-demand operation mode, wherein the system (10) queries the Passive Traffic Analyzer (32) to (perform if necessary and) inform about a passive monitoring process on a specific network node (31); proactive operation mode, wherein the Passive Traffic Analyzer (32) automatically informs the system (10) about periodic passive measurements on certain network nodes (31).
- Physical Layer Monitoring (33): a module consisting of the set of alarms that network nodes (31) can announce related with physical impairments, like loss of connectivity or bad transmission quality. These alarms are announced to the system (10).
- MPLS OAM (34): a module consisting of the set of capabilities that enable operators to troubleshoot MPLS networks (30). Since the targeted MPLS network (30) can be based on E2E MPLS, these tools are the most adequate for the overall monitoring. Lightweight tools can be used proactively to detect potential congestion situations over certain network areas, while others executed on-demand from the system (10) can be valid to confirm or reject the presence of such network impairments, or for detection purposes when node/link failures occur (in case no faster tool was available).
- MPLS Signaling (35): this module enables the system (10) to start MPLS-based restoration processes in the network (30) in case certain network segments experience a lack of QoS.
- System Database (36): this module stores the required information both from the operator's network (30), for example its status, the configured paths, etc., and from the application layer (20), for example the active services.

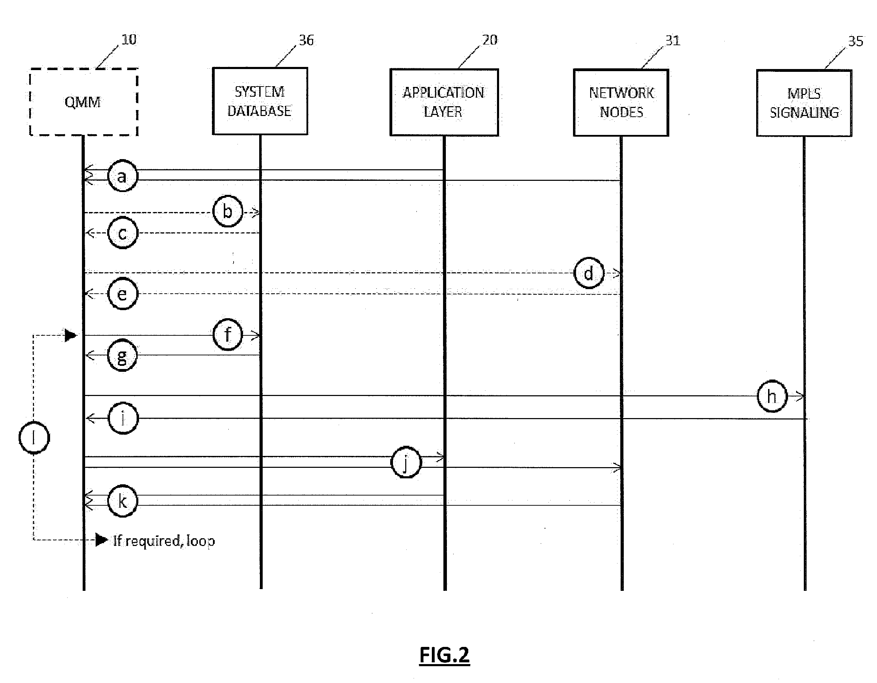

Figure 2 shows a flow diagram of the communication messages exchanged in the network scenario above illustrated in Figure 1, involving the QMM system (10) which makes use of QoS degradation prevention, detection and restoration procedures as described below. Solid lines in Figure 2 refer to mandatory procedures, while dotted lines are used for those procedures which are optional in the system (10). This system (10) implements a method for determining QoS degradations which comprises the following main steps:
- Receiving alarms (a) from the application layer (20) and/or from any/all the network nodes (31), including Passive Traffic Analyzer (32) nodes, Physical Layer Monitoring (33) nodes and MPLS OAM (34) nodes.
- Depending on the specific alarm, the system (10) may request (d), normally from the network nodes (31), further testing for location purposes, so the network nodes (31) answer back with location responses (e).
- Once the fault is located, the system (10) directly starts the traffic restoration procedures (h) via interaction with the MPLS Signaling (35) module and receives the result (i).
- At any stage, the system (10) may need to consult the System Database (36) before making any further decision; this step of looking up Database (36) is optional before requesting location tests, query step (b) and corresponding reply (c), while query step (f), with its corresponding response (g), before starting restoration procedures (h), is mandatory.
- Once the traffic has been restored, further testing procedures are triggered (j) by the system (10) to ensure the correct overall QoS within the new network situation.
- These testing procedures may be carried out (k) by the network nodes (31) and/or the application layer (20).
- While the system (10) is still detecting QoS degradation, further restoration mechanisms could be triggered by the system (10), via a loop (i) until the system (10) can declare a global stable non-degraded behavior.
- The mechanisms to recover the original traffic situation once the fault is repaired, which are out of the scope of the invention, can be governed by the well-known "make before break" mechanisms available for MPLS networks, and would be triggered by the operator at any time of its convenience.
- Since different alarms from different modules might arrive at the system (10), the method incorporates the optional possibility to select the alarm correlation criterion, so that when several are received, possibly referring to the same QoS impairment, the system (10) is able to compile and manage all of them, correlate them and execute the appropriate corrective actions.

In a possible enbodiment, the criteria for the alarms management (others are possible) are the following:
- in case several alarms arrive to the QMM system (10) in a short (configurable) time period, the system (10) confers higher priority degree to alarms which present (in general) faster error location mechanisms. Each of the monitoring procedures has been therefore tagged with a priority weight.
- The only exception to the above-mentioned rule is for application layer (20) monitoring: since this layer shares the experience with the service customers, alarms received from it will have the highest priority.
- Physical layer (33) and passive monitoring protocols (32) can rapidly locate the problem experienced in the network, as both of them generate alarms at the exact point where the impairment happens. Physical layer (33) alarms will have higher priority degree (second overall), though, due to its fastest detection time and due to the very common operational need to quickly overcome any physical layer degradation that may happen. Therefore, passive traffi anayzer (32) monitoring alarms will be managed with the third priority level when arriving at the QMM system (10).
- Finally, the MPLS OAM (34) monitoring mechanisms normally entail fast detection of anomalies, but at the cost of bandwidth as previously stated. Moreover, the time to locate the affected segment depends on many variables, so these alarms will be given the lowest priority level (fourth overall).

With this approach, in case several alarms of different types arrive to the QMM system (10), this system (10) is able to manage them: attending first those which locate impairments quicker, the system (10) is later able to determine which nodes/links and LSPs/services are affected, and is able to correlate the rest of the alarms so they do not need to be considered. It is important to mention that having a higher detection or location time does not prevent alarms from the slowest modules to appear in the whole network scenario, since every tool can monitor different parameters and is more adequate for different purposes.

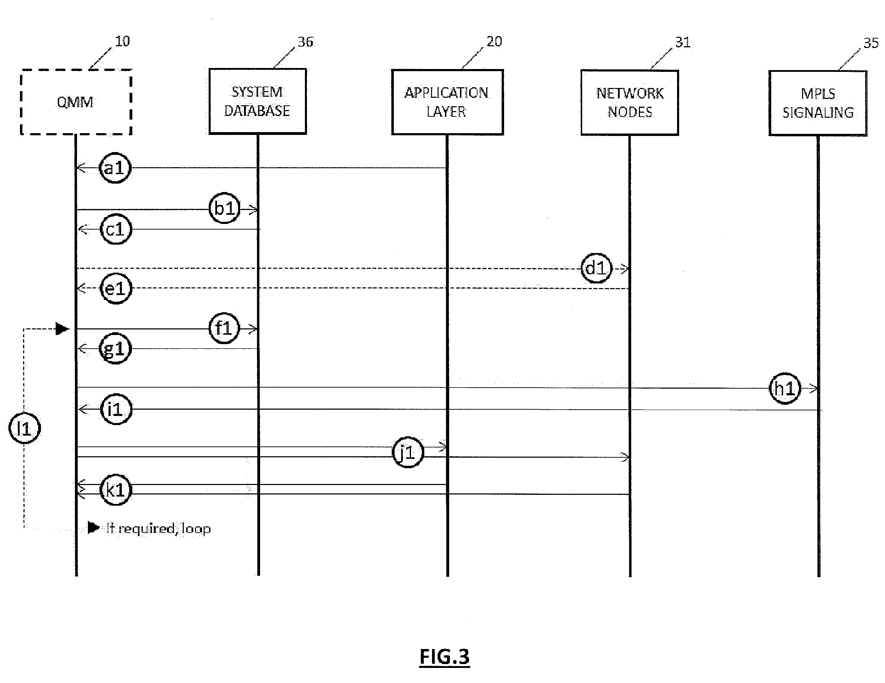

For the examplary network scenarios and use cases described below and shown in Figures 3-6, the criteria for the alarms management to be considered is the one described in detail above.

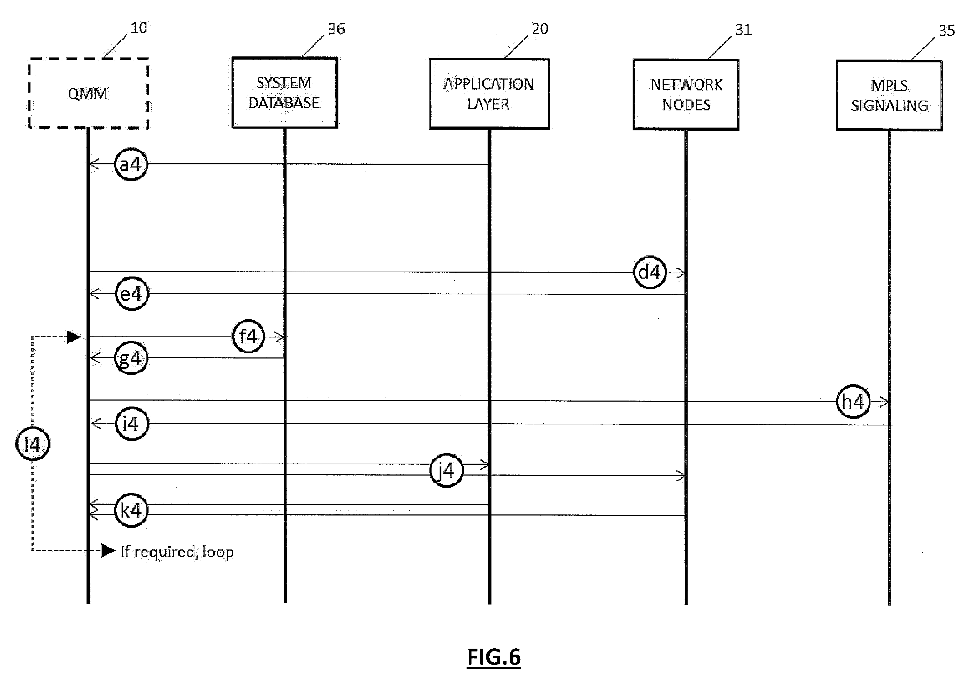

Figures 3-6, extend the basic workflow previously described in Figure 2 and include the interactions that take place among the QMM system (10) and the existing modules in several use cases. Two main categories of use cases can be defined: those cases, shown in FIGs. 3-5, in which the QMM system (10) operation is reactive, i.e., it reacts after the QoS degradation has happened; and those such as the one shown in Figure 6, in which the QMM system (10) is proactive, i.e., it reacts trying to avoid the QoS degradation before it happens.

Figure 3 shows the specific workflow for a use case in which the alarm is received from the application layer (20), which means that the customer is being aware of the QoS degradation, so the QMM system (10) operation must be reactive to quickly solve the alarm situation. The system (10) receives an alarm (a1) from the application layer (20), and consults (b1) the DataBase (36) to obtain (c1) the network path that is being used by application layer (20) for the given service to which the alarm refers to. Then, the system (10) checks internally other potential alarms which may have been received from network nodes (31) by the QMM system (10) along that specific path. If the system (10) finds any (which should normally be the case), it groups them according to the specific network segment or node affected (if already identified by the other alarms), and jumps into a step (f1) of consulting again the DataBase (36) for information on all the services that might be potentially affected by such events. The subsequent step (g1) is the DataBase (36) giving a Response.
On the contrary, if no other alarms are present or those present have not yet located the affected segment(s), then the QMM system (10) requests (d1) the MPLS OAM (34) mechanisms in the network nodes (31) to carry out specific on-demand operations to locate the fault, depending on the type of alarm received from the application layer (20). The complete definition of which operations are associated to which alarms is out of the scope of the invention. To provide just an example, if the alarm referred to long delay in an audio-conference service, then the MPLS OAM (34) tools could be those that measure the packet delay along the path. The tests carried out by the MPLS OAM (34) tools should be first related with the end-to-end path. In case the result (e1) from the MPLS OAM (34) mechanisms operations to locate the fault is adequate, then the system (10) declares that potential problems can be located within the customer premises. Resolution of such problems is also out of the scope of the invention. On the other hand, if the result of fault location from the MPLS OAM (34) is unsatisfactory, then, segment by segment testing is done to locate the specific segment or node affected by degradation. Tests, performed by the MPLS OAM (34), are triggered and controlled by the QMM system (10), which is the one having the information of the segments.
Once the fault is located by the MPLS OAM (34) and this location result (e1) is received by the QMM system (10), then the system (10) continues with steps (f1) and (g1) of query and answer respectively to/from the DataBase (36), equivalent to those ones described above. At this stage, the system (10) has a clear vision on what services can be affected by the different degradations, so it triggers (h1) MPLS signaling (35) to initiate the protection/restoration mechanisms for each of those services affected by the alarm. Results of the restoration procedures are provided in step (i1).
The QMM system (10) needs to check the correct operation of all the restored services, so it triggers (j1) on-demand monitoring mechanisms either at the application layer (20), if possible depending on availability of such tools at the different customers premises, or via MPLS OAM (31), which is always available. Results from testing are provided in step (k1).
In case some of the results from testing are unsatisfactory, the system (10) consults again (l1) the DataBase (36) for alternative paths for those services, and repeats (in a loop) the execution of steps from (h1) to (k1) for those alternative paths.
It has to be noted that many networks have their own automatic restoration procedures, for example, when links are cut. On those cases, the system (10) is aware of such situation in steps (c1) or (g1), since the DataBase (36) already provides the information that one or several specific services have been automatically restored to a backup path. The QMM system (10) duties on such event grant that other services, possibly not able to automatically being recovered, are not affected either. The operation for them is equivalent to what has already been described in the use case of Figure 3.

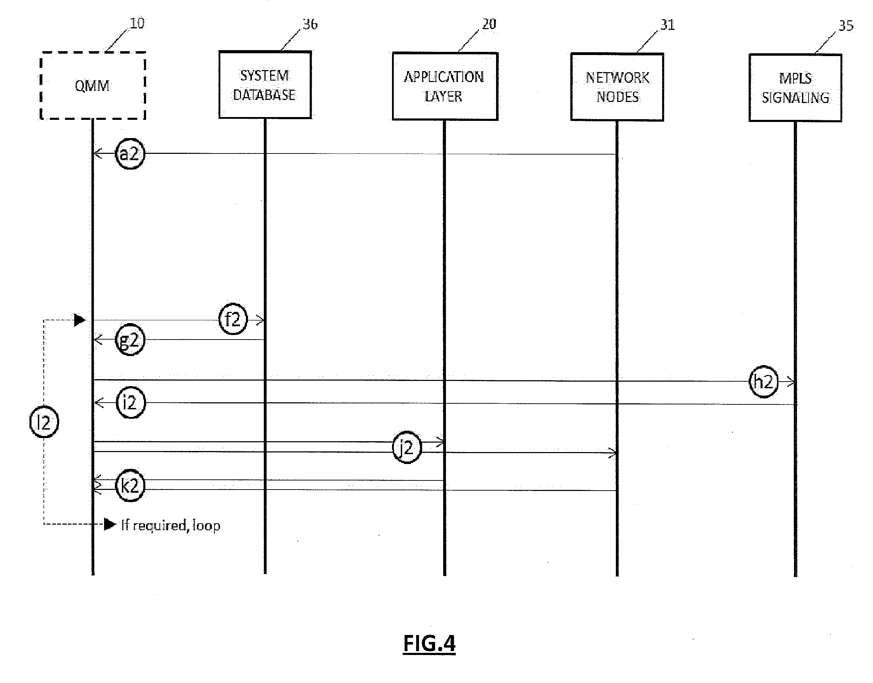

Figure 4 shows the specific workflow of another use case in which the QMM system (10) operation is reactive to an alarm received from the physical layer monitoring (33) tools.
The QMM system (10) receives an alarm (a2) from the physical layer monitoring (33) tools, and does not need to execute the location operations, i.e., avoiding steps from (b) to (e) in the basic flow of Figure 2, since these tools already provide such information. Therefore, system (10) goes directly to the gathering of other potential alarms referring to the same segment (coming from network nodes (31) with lower alarm priority), and jump into step (f2) to consult the DataBase (36) for information on all the services that might be potentially affected by this specific event. Response from DataBase (36) is given in step (g2).
At this stage, the QMM system (10) has a clear vision on what services can be affected by the degradation, so it triggers (h2) MPLS signaling (35) mechanisms to initiate the protection mechanisms for each of those services. Results of the restoration procedures are provided in step (i2). Finally, the QMM system (10) needs to check the correct operation of all the restored services, so it triggers on-demand monitoring mechanisms (j2) either at the application layer (20), if possible depending on availability of such tools at the different customers premises, or via MPLS OAM (31), which is always available. Results from testing are provided in step (k2). In case some of them are unsatisfactory, the QMM system (10) consults again (l2) the DataBase (36) for alternative paths for those services and executes in a loop, if required, steps from (h2) to (k2) for those alternative paths. In networks with their own automatic restoration procedures, the QMM system (10) can only be aware of such situation in step (g2); for those cases, the system (10) duties are restricted to those services which cannot be automatically recovered. The operation for them is equivalent to what has already been described in the use case of Figure 4.

There is another possible use case in which an alarm arrives to the QMM system (10) from the passive traffic analyzer (32). Then, the specific workflow is equivalent to the one in the previous case, depicted in Figure 4. Only differences are:
- In step (a2), the system (10) receives the alarm from the passive traffic analyzer (32) instead of the physical layer monitoring (33) tools.
- The alarm types that the system (10) needs to look for segment correspondence are those coming only from the MPLS OAM (34) tools, since they are the ones with lowest priority.

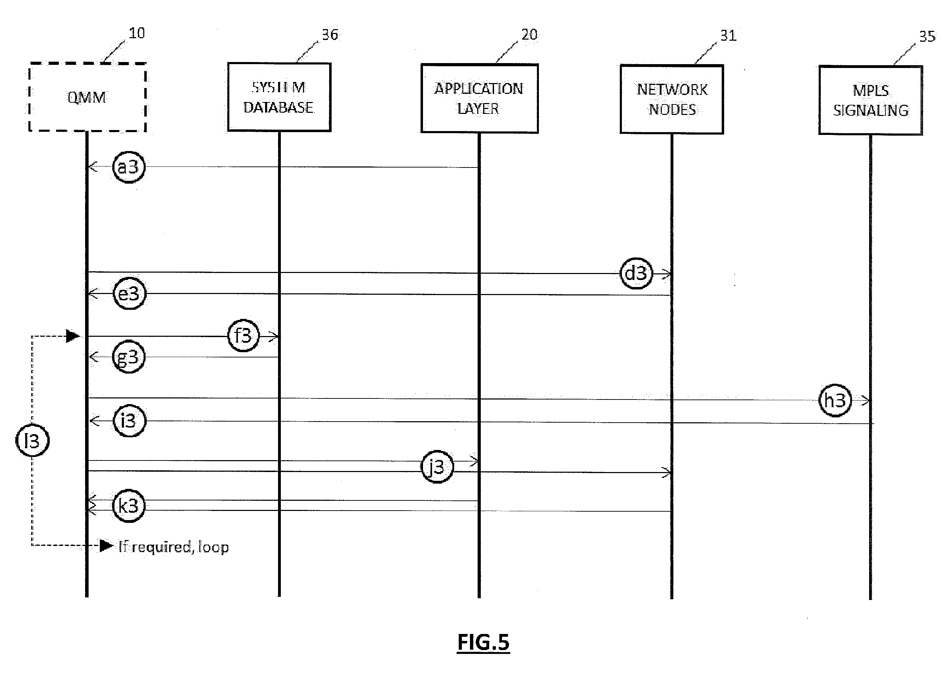

Figure 5 shows a specific workflow of another use case in which the QMM system (10) operation is reactive to an alarm received from the MPLS OAM (34) tools. In MPLS networks (30), monitoring can be done at different MPLS levels, and between different pairs of MPLS network nodes (31), even if they are not directly connected.

Therefore, the operation of the system (10) depends on how this monitoring is done. For alarms coming from tools executed between network nodes (31) which are directly connected, the operation is similar to use cases shown in Figure 4, where an alarm is received from the physical layer monitoring (33) or the passive traffic analyzer (32), since no location procedures need to be run, but with the following differences:
- the system (10) receives the alarm (a3) from the MPLS OAM (34) tools instead of the physical layer monitoring (33) tools or the passive traffic analyzer (32),
- There is no need to correlate other alarms, since these are the ones with lower priority.

For alarms coming from tools executed between network nodes (31) which are not directly connected, the operation is very similar to use case shown in Figure 3, where an alarm is received from the application layer (20), since a location procedure across the different links that the active test has traversed is required. The procedure is then the one shown in Figure 5 and as follows:
The QMM system (10) receives an alarm (a3) from the MPLS OAM (34) tools. There is no need to consult the network path in this case, i.e., avoiding steps from (b) to (c) in the basic flow of Figure 2, since it has been explicitly defined in the monitoring tool and is well-known. Moreover, since there are no further alarms to correlate, the location procedure is mandatory: the QMM system (10) requests (d3) the MPLS OAM (34) mechanisms in the network nodes (31) to carry out specific on-demand segment by segment operations to locate the fault and their Responses are sent back in step (e3). After location, the QMM system (10) moves forward into step (f3) to consult the DataBase (36) for information on all the services that might be potentially affected by the located event. Response from DataBase (36) is given in step (g3). At this stage, the QMM system (10) once again has a clear vision on what services can be affected by the different degradations, so it triggers (h3) signaling mechanisms (35) to initiate the protection mechanisms for each of those services. Results of the restoration procedures are provided in (i3). Finally, the QMM system (10) needs to check the correct operation of all the restored services, so it triggers on-demand monitoring mechanisms (j3) either at the application layer (20), if possible depending on availability of such tools at the different customers premises, or via MPLS OAM (31), which is always available. Results from testing are provided in step (k3). In case some of them are unsatisfactory, the QMM system (10) consults again (l3) the DataBase (36) for alternative paths for those services and executes, if required, in a loop, steps from (h3) to (k3) for those alternative paths. In networks with their own automatic restoration procedures, the QMM system (10) can only be aware of such situation in step (g3). For those cases, the QMM system (10) duties are restricted to those services which cannot be automatically recovered. The operation for them is equivalent to what has already been described in this use case of Figure 5.

Figure 6 shows the QMM system (10) able to react to potential degradations in a proactive way, i.e., even before they happen. In particular, the main event from which the QMM system (10) can protect the network (30) is traffic congestion. Three network operation zones can be distinguished
- In a "correct operation" zone there is no real danger of packet loss due to sudden traffic growth. Thus, the traffic monitoring needs not be very precise or fast.
- In the "potentially conflictive" zone still there is no real danger of packet loss, but the traffic monitoring needs to be very precise to avoid increasing the traffic and entering in the critical zone.
- In the "critical" zone, in case of sudden traffic growth packets could be lost, so actions must be executed to go back (at least) to the "potentially conflictive" zone

It must be noted that the desired behavior for operators is to be in the "correct operation" zone, and that unexpected traffic growths just affect their networks in the sense that they temporarily enter the "potentially conflictive" zone. Stable traffic growth due to, for example, an increment in the number of customers or in the number of offered services, should be handled via other methods like investment in new equipment or revised network planning. It must also be noted that the definition of the thresholds between zones is operator-dependent, and is out of the scope of this invention.
To avoid network congestion, the QMM system (10) initially uses the passive traffic analyzer (32) for passive monitoring, thus not consuming network bandwidth to detect "potentially conflictive" situations. SNMP protocol, for example, can monitor network bandwidth until a certain threshold is surpassed. At that moment, faster and more precise monitoring is needed, and provided via MPLS OAM (34) tools within the network segment which is "potentially conflictive".
This type of monitoring is to detect and locate "critical" situations very quickly: since the network segment to monitor has been very much reduced, the bandwidth consumption problem is strictly controlled, and the amount of monitoring packets that can be injected can be high enough to ensure the adequate performance.
Passive monitoring tools of the passive traffic analyzer (32) are continuously measuring the network traffic, and in case they measure bandwidths that surpass the specified threshold for "potentially conflictive" situations, they generate an alarm (a4) to the QMM system (10), as shown in the flow chart of Figure 6. The specific segment is already located by the passive tool, so the QMM system (10) is able to directly request (d4) the MPLS OAM (34) tools to execute continuous high-bandwidth-demanding tests over that segment.
It may happen that the threshold towards "critical" situations is never surpassed. Then, eventually, the passive traffic analyzer (32) that is still running can detect that the network segment has gone back to the "correct operation" zone and announces this to the QMM system (10), which in turn stops the active monitoring of the MPLS OAM (34) tools.
In case the threshold towards "critical" situations is surpassed, the MPLS OAM (34) tools announces it (e4) to the QMM system (10), which in turn starts a similar procedure, steps from (f4) to (l4) to the one in other use cases, for example in the use case of receiving alarms from MPLS OAM (34) shown in Figure 5. The only differences between them are that: i) the QMM system (10) needs not to modify the path for all the services traversing the "critical" segment, but just for enough of them as to go back to the "potentially conflictive" situation (eventually notified via a new alarm coming from the MPLS OAM (34) tools), and ii) the paths modification must be done without any traffic loss. In other words, the QMM system (10) modifies and verifies one service's path at a time, until it receives an alarm from the MPLS OAM (34) tools stating that the situation has turned back into "potentially conflictive". The candidate service for migration selection criterion is out of the scope of this invention. Finally, eventually the passive traffic analyzer (32) can determine "correct operation", and then it is possible to migrate back the services to the original paths, once again without any traffic loss.

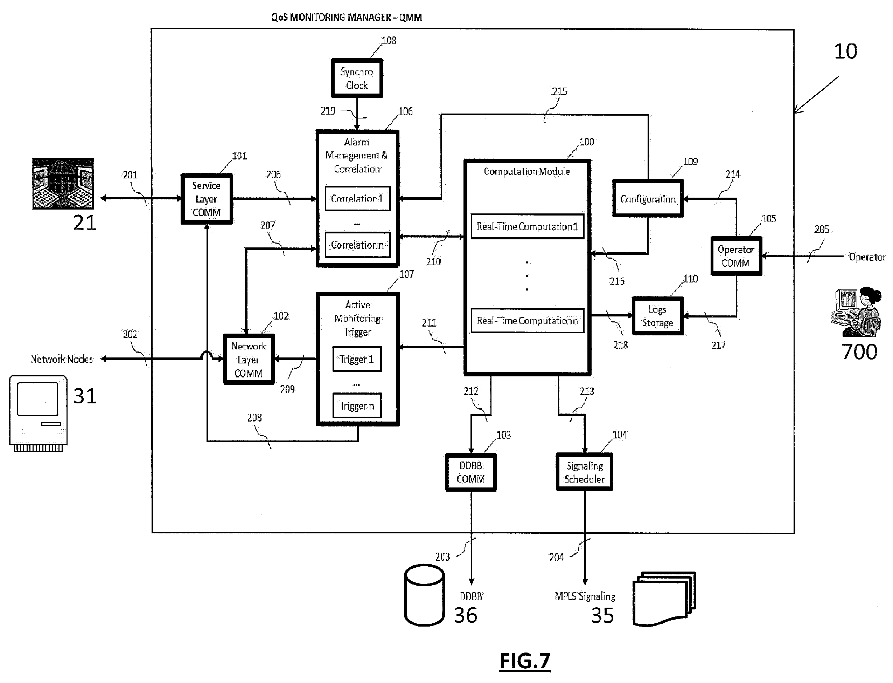

Figure 7 depicts the architecture of the proposed Quality of Service Monitoring Manager QMM system (10), including the different modules and interfaces. The system (10) needs not be built on a single physical machine; it is possible to distribute the different functionalities over different physical elements, in particular over the MPLS network nodes themselves, with the only requirement of implementing the required interfaces' functionalities. For implementation and correct operation, it is required at least one processor and Ethernet connectivity towards all the required external modules. However, multiple processors are recommended for higher performance. Further description of the different modules and the different, internal and external, interfaces is provided below, according to a possible embodiment of the invention.

### - Internal Modules QMM system (10)

Computation Module (100), CM: constitutes the brain and intelligence of the system (10) and is in charge of coordinating all the executed operations in the different possible use cases, as described before. In particular:
- It receives sets of correlated alarms from the Alarm Management & Correlation module (106). Each set initiates a different computation procedure, which can be any of the five previously described for the use cases.
- It may require the Alarm Management & Correlation module (106) to poll the external Passive Traffic Analyzer (32) module of the network nodes (31), via the Network Layer COMM module (102) for network layer communication, when the Passive Traffic Analyzer (32) is operating in on-demand mode. The passive measurement to be polled is decided by the Computation Module (100) depending on the type of alarm received.
- It may require the Active Monitoring Trigger (107) module to start active monitoring procedures either at the external Service Support System, via the Service Layer COMM module (101) or at the external MPLS OAM (34) modules of the network nodes (31), via the Network Layer COMM module (102). The type of active measurement to be triggered is decided by the Computation Module (100) depending on the type of alarm received.
- It may request the external System Database (36) module, via the DDBB COMM module (103) for information regarding the network/services status, depending on the requirements from each of the use cases. It may also request the external database or DDBB (36) for new paths over which it should provision restored services. Finally, it populates the DDBB with status changes that it may have detected, such us link unavailability.
- It may request the Signaling Scheduler module (104) to carry out restoration operations over a group of services, providing the new path in the request.
- It stores the threshold values configured by the operator to define the operation zones as stated in use case 5, values which are received from the Configuration module (109).
- It populates the Logs Storage module (110) with information associated to the different alarms received and operations carried out, so they can be consulted by the operator via the Operator COMM module (105).

Service Layer, Network Layer, DDBB, Operator COMM modules (101, 102, 103, 105) and Signaling Scheduler (104) module interface external systems. The common objective of such modules (101, 102, 103, 104, 105) is to hide from the QMM processing modules the particular details of potentially different implementations of the external interfaces, unifying the communications towards inner modules. For example, the System Database (36) can be implemented using different technologies, and thus, DDBB - DBCOMM interface (203) can present different technical implementations, all giving support to the same set of requirements. The DDBB COMM module (103) is then in charge of translating the different format messages, providing unified messages over CM - DBCOMM interface (212).

Service Layer COMM (101), SLCOMM: interfaces the Service Support System (21) to receive alarms or request active testing at the service layer. Received alarms are then sent to the Alarm Management & Correlation module (106), while active tests triggering is done at the Active Monitoring Trigger module (107).

Network Layer COMM (102), NLCOMM: interfaces the network nodes to receive alarms from different external systems: i) Physical Layer Monitoring (33), ii) Passive Traffic Analyzer (32) and/or iii) MPLS OAM (34). It may also request active MPLS OAM testing or an on-demand passive poll. Received alarms are sent to the Alarm Management & Correlation module (106), module which also triggers the passive on-demand poll. On the other hand, active tests triggering is done at the Active Monitoring Trigger module (107).

DDBB COMM (103) DBCOMM: interfaces the System Database (36) to receive information regarding the network/service status or regarding new paths over which to provision restored services. This information is requested by the Computation Module (100). The Computation Module (100) can also populate, via this module, the System Database (36) with network/service status changes that the QMM system (10) has detected.

Signaling Scheduler (104), SS: interfaces the MPLS Signaling (35) functionalities available in the network to permit restoration procedures, at the request of the Computation Module (100). These functionalities, in the simplest implementation, could be accessed via a management network using the network nodes Command Line Interface or CLI. Alternative more sophisticated solutions providing equivalent features are valid.

Operator COMM (105), OCOMM: provides an interface for the operator (700) to configure both the priority levels of the different alarms that could be received and the thresholds between the operation zones for use case in which the QMM system (10) operates proactively, values which are stored in the Configuration module (109). Its external interface permits the operator (700) to consult information about the occurred alarms and performed actions as well, information coming from the Logs Storage module (110).
The rest of the processing internal modules of the QMM system (10) are:
Alarm Management & Correlation (106) AMC: this module is in charge of processing the different alarms received from the external modules, via the Service Layer and Network Layer COMM modules (101, 102). Upon an alarm reception, it determines the priority according to the values provided by the Configuration module (109), and executes the correlation algorithm associated with that priority (basically, it checks for alarms with less priority making reference to the same fault). The grouped alarms are then sent to the Computation Module (100), so it can start procedures as stated in the use cases description. The correlation process is governed by a Synchronization Clock (108), so it is made sure that alarms separated in time are treated differently. Operation of this module for a specific alarm may be delayed in case an alarm with a higher priority arrives, if it is not capable of treating them in parallel. Finally, the Alarm Management & Correlation (106) is also in charge of polling the external Passive Traffic Analyzer (32), via the Network Layer COMM module (102), as requested by the Computation Module (100), for on-demand operation mode of the passive monitoring tools.

Active Monitoring Trigger (107), AMT: this module is in charge of prompting the active tests available in the external systems, in particular, in the Service Support System (21) for tests at the service layer or using the MPLS OAM (34) tools of the network nodes. Communication with the former is made across the Service Layer COMM module (101), while the Network Layer COMM module (102) permits communication with the latter. The execution of external active tests is requested by the Computation Module (100), and results are provided back by the Active Monitoring Trigger (107).

Synchronization Clock (108), SC: it provides the clock for the synchronization of the correlation procedures carried out at the Alarm Management & Correlation module (106).

Configuration (109), CONF: it stores the configuration parameters provided by the operator for the priority values to be given to each of the potentially to be received alarms, and for the two thresholds separating the operation zones in use case in which the QMM system (10) operates proactively. First set of parameters is then forwarded to the Alarm Management & Correlation module (106), while the second is forwarded to the Computation Module (100).

Logs Storage (110), LS: it stores information about occurred alarms and executed associated corrective actions, information which is provided by the Computation Module (100), prior to its presentation to the operator (700), via the Operator COMM module (105).

### - Internal interfaces of the QMM system (10)

### SLCOMM - AMC Interface (206) and NLCOMM - AMC Interface (207):

Both interfaces share the same procedure: To forward all the alarms received from external monitoring systems towards the Alarm Management & Correlation module (106). The format of the messages differs depending on the specific external module generating the alarm, since in each procedure different types of information are available; in particular, whenever the "fault location" information is available, it should be added to the message body. The response message from the Alarm Management & Correlation module (106) is an acknowledgement of reception. Moreover, the NLCOMM - AMC Interface (207) also permits another procedure: The Alarm Management & Correlation module (106) to request a certain type of external passive measurement at the network nodes. The request message must include: i) the network node/interface where the measurement should be done, ii) the type of measurement to be done, e.g., consumed bandwidth, and iii) for how long or how many repetitions should be done. The input for the last parameter could be in the form of "until a certain threshold is surpassed", as required by use case in which the QMM system (10) operates proactively. The response message from the Network Layer COMM module (102) provides the result of the requested measurement.

### SLCOMM - AMT Interface (208) and NLCOMM - AMT Interface (209): Both interfaces share the same procedure:

The Active Monitoring Trigger module (107) to request a certain type of external active measurement, either by the Service Support System (21) or by the MPLS OAM (34) mechanisms of the network nodes (31). The request message must include: i) the specific service - in case of service layer monitoring - or the network segment/node/interface - in case of network layer monitoring - to be tested, ii) the type of measurement to be done, e.g., experienced delay, and iii) for how long or how many repetitions should be done. The input for the last parameter can be in the form of "until a certain threshold is surpassed", as required by use case in which the QMM system (10) operates proactively. The response messages from the Service Layer and Network layer COMM modules (101, 102) provide the result of the requested measurement.

### CM - AMC Interface (210): It permits two procedures:

The Alarm Management & Correlation module (106) to send sets of correlated alarms to the Computation Module (100). The format of these messages differs depending on the specific external module generating the alarm, as stated also for the SLCOMM - AMC and NLCOMM - AMC Interfaces (206, 207). The response message from the Computation Module (100) is an acknowledgement of reception.

The Computation Module (100) to request a certain type of external passive measurement to the Alarm Management & Correlation module (106). The format of the request and response messages should match a scheme equivalent to the second procedure in the NLCOMM - AMC Interface (207).

### CM - AMT Interface (211): It permits one procedure.

The Computation Module (100) to request a certain type of external active measurement to the Active Monitoring Trigger module (107). The request message includes the same information as for the SLCOMM - AMT (208) or NLCOMM - AMC (209) Interfaces, with an additional field to specify the external element to carry out the measurement, i.e., if it needs to be handled by the application layer probes or the MPLS OAM (34) mechanisms. The response message from the Active Monitoring Trigger module (107) provides the result of the requested measurement.

### CM - DBCOMM Interface (212):

It permits four types of procedures, three requests from the Computation Module (100) to the DBCOMM module (103), and one informational, in the same direction:
i) Requesting the path that a specified service is traversing, so location procedures can start after an alarm from the application layer is received. The request message includea a service identifier, while the response includea the path, for example, in the form of an Explicit Route Object or ERO.
ii) Requesting the services which traverse a specified path, so all the services which need to be restored after a fault is located are known. The request message includes the path, for example in the form of an ERO, while the response provides a list with the service identifiers.
iii) Requesting a new path for a specified service, given that the original path is not available. It has to be noted that a specific module for path computation is required in the external System Database for this purpose. An example of such module is the Path Computation Element - PCE - defined by IETF. The request includes the service identifier, while the response includes the new ERO
iv) Informing about services/network changes caused by fault situations, so the external DDBB (36) is kept up to date. The informational message includes different fields depending on the specific event being registered, while the response includes just an acknowledgement of reception.

### CM - SS Interface (213): It permits one procedure:

The Computation Module (100) to request a restoration operation to the Signaling Scheduler (104). The request message must include: i) the specific service(s) which need to be restored, and ii) the network path over which these services should be restored. It must be noted, therefore, that services can be grouped into a single request when they share the same new path. Services affected by the same fault, but restored over different paths, generate different requests in this interface. Response from the SS module (104) includes the result of the restoration operation (successfully accomplished or not, and the reason in the latter case).

### OCOMM - CONF Interface (214): It permits two procedures:

The Operator COMM module (105) to store in the Configuration module (109) the priority values set by the operator (700) for the different external alarms available in the monitoring system. The message includes an unrepeated integer value per each of the types of alarm, and the response is an acknowledgement of reception.

The Operator COMM module (105) to store in the Configuration module (109) the two threshold values separating the three operation zones defined in use case in which the QMM system (10) operates proactively. The message includes two values between 0 and 100, corresponding to the link bandwidth usage values that separate such zones. The response is an acknowledgement of reception.

### CONF -AMC Interface (215): It permits one procedure:

The Configuration Module (109) to store in the Alarm Management & Correlation module (106) the priority values of the different types of alarms that the system can receive, values which are configurable by the operator (700). In other words, this is a sort of relay of the first procedure in the OCOMM - CONF Interface (214). Response is an acknowledgement of reception.

### CONF - CM Interface (216): It permits one procedure:

The Configuration Module (109) stores in the Computation Module (100) the threshold values that define the operation zones (use case in which the QMM system (10) operates proactively), values which are configurable by the operator (700). The message includes two values, separating the "correct" and "potentially conflictive" zones on one side, and the latter with the "critical" zone on the other. Again, it is a sort of relay, in this case of the second procedure in the OCOMM - CONF Interface (214). Response is an acknowledgement of reception.

### OCOMM - LS Interface (217): it permits one procedure:

The Operator COMM module (105) to request the Logs Storage module (110) the information that permits having a clear knowledge of what events have happened, and which corrective actions have been taken by the QMM system (10), at the request from the operator (700). Response is a list of events and associated actions.

### LS - CM Interface (218): It permits one procedure:

The Computation Module (100) to store in the Logs Storage module (110) all the information required by operators (700), as stated in the OCOMM - LS Interface (217). Response is an acknowledgement of reception.

### SC - AMC Interface (219): It permits one procedure:

The Synchronization Clock (108) to provide the timing for the correlation procedures in the Alarm Management & Correlation module (106). This is a continuous clock signal with no specific messages being interchanged.

### - External interfaces of the QMM system (10)

External interfaces are interfaces permitting communication with external systems that may present many different kinds of interface implementations. This way, the internal specific procedures of the QMM system (10) are hidden of the details of external systems implementation technologies, and share unified message formats. This way, a new interface implementation from an external module just demands modifications in the COMM modules and interfaces of the QMM system (10).
SSS - SLCOMM Interface (201): is the source of the service layer alarms relayed by SLCOMM - AMC interface (206), and relays the active service layer measurement requests coming from SLCOMM - AMT interface (208).
NN - NLCOMM Interface (202): is the source of the network layer alarms relayed by NLCOMM - AMC interface (207), and relays the passive and active network layer measurement requests coming from NLCOMM - AMC and NLCOMM - AMT interfaces (207, 209).
DDBB - DBCOMM Interface (203): relays the requests and informational messages coming from CM - DBCOMM interface (212).
MPLS Sig - SS Interface (204): relays the requests coming from CM-SS interface (213).
Operator - OCOMM Interface (205): is the source of the configurable parameters relayed through OCOMM - CONF interface (214), and of the requests from operator (700) for logs information, relayed through interface OCOMM - LS interface (217).

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for restoring QoS degradations in MPLS networks, **characterized by** comprising:
- receiving at least an alarm (1) from Application Layer (20) or from a network node (31) of an MPLS network (30),
- locating a faulted segment of the MPLS network (30) associated with the, at least one, received alarm;
- correlating all the alarms associated with the faulted segment at the same location,
- determining services affected by the correlated alarms,
- consulting a database (36) to obtain restoration paths for all the affected services,
- restoring the affected services using the restoration paths,
- testing the restored services.

2. The method according to claim 1, wherein, if the alarm (1) is received from a network node (31), locating a faulted segment comprises requesting location from the network node (31).

3. The method according to claim 1, wherein, if the alarm (1) is received from Application Layer (20), locating a faulted segment comprises requesting location of a network path used by the Application Layer (20) from the database (36) and requesting from MPLS OAM (34) location of the faulted segment along the network path.

4. The method according to any preceding claims, wherein correlating the alarms comprises assigning a priority weight to the received alarm (1).

5. The method according to claim 4, wherein the priority weight is assigned in accordance with the following criteria:
- if the alarm (1) is received from Application Layer (20), the alarm (1) is assigned to the highest priority weight;
- if the alarm (1) is received from the MPLS OAM tools (34) of a network node (31), the alarm (1) is assigned to the lowest priority weight;
- if the alarm (1) is received from the Physical Layer monitoring tools (33) of a network node (31), the alarm (1) is assigned a higher priority weight than a priority weight assigned to the alarm (1) in case it is received from the passive traffic analyser (32) of a network node (31).

6. The method according to any preceding claims, wherein the step of restoring uses MPLS signaling (35).

7. The method according to any preceding claims, wherein testing the restored services is requested from Application Layer (20) or from MPLS OAM (34).

8. The method according to any preceding claims, further comprising, if there are results from testing of the restored services which fail, consulting the database (36) to obtain alternative restoration paths for all the affected services and repeating the steps of restoring and testing using the alternative restoration paths.

9. The method according to any preceding claims, further comprising defining a plurality of network operation zones and monitoring network segments to determine in which defined network operation zone a network segment is operating and, depending on the determined network operation zone, monitoring is active or passive.

10. The method according to claim 9, wherein monitoring network segments is performed by a passive traffic analyzer (32) or MPLS OAM (34).

11. The method according to any of claims 9-10, wherein if the determined network operation zone is critical, indicating potential QoS degradations, an alarm (1) from a network node (31) of the MPLS network (30) is received.

12. The method according to claim 11, wherein if an alarm (1) is received from the passive traffic analyzer (32), monitoring network segments is continued by MPLS OAM (34).

13. The method according to claim 11, wherein if the alarm (1) is received from the MPLS OAM (34), the steps of restoring and testing are repeated using restoration paths for services traversing the network segment in the determined critical network operation zone

14. A system (10) for restoring QoS degradations integrated in a MPLS network (30), **characterized by** further comprising:
- a service layer communication module (101) for receiving at least an alarm (1) from Application Layer (20) and a network layer communication module (102) for receiving at least an alarm (1) from a network node (31) of the MPLS network (30),
- an alarm management and correlation module (106) which receives all the alarms associated with a faulted segment at a same location from the service layer communication module (101) and the network layer communication module (102) and correlates the received alarms,
- at least a computation module (100), which obtains the location of the faulted segment from means for locating segments of the MPLS network (30), configured for determining services affected by the correlated alarms, which the computation module (100) receives from the alarm management and correlation module (106), by consulting a database (36) from which restoration paths for all the affected services are obtained,
- a signaling scheduler (104) connected to MPLS signaling (35) for enabling restoration of the affected services using the obtained restoration paths when is triggered by the computation module (100),
- an active monitoring trigger (107) which is requested by the computation module (100) for obtaining tests on the restored services from the service layer through the service layer communication module (101) and from the network layer through the network layer communication module (102).

15. A computer program comprising computer program code means adapted to perform the steps of the method according to any claims from 1 to 13 when said program is run on a computer, a digital signal processor, a field-programmable gate array, an application-specific integrated circuit, a microprocessor, a micro-controller, or any other form of programmable hardware.
